# DEMANDE DE BREVET EUROPEEN

(11) **EP 1 001 246 A1**
(43) Date de publication de la demande: **17.05.2000**
(21) Numéro de dépôt: 99811024.1
(22) Date de dépôt: 09.11.1999
(51) Int. Cl.: G01B 3/18

(54) **Système de touches interchangeables pour un dispositif de mesure**

(30) Priorité: 13.11.1998 FR 9814251
(71) Demandeur: SOCIETE FLORENZA (Société Anonyme), 74300 Thyez (FR)
(72) Inventeur: Florenza, Charles, 74300 Thyez (FR)
(74) Mandataire: Kiliaridis, Constantin

(57) **Abrégé**

L'invention concerne système de touches interchangeable pour un dispositif de mesure. tel qu'un comparateur ou un micromètre comportant un étrier (11) et deux touches standard. Une touche est fixe par rapport à l'étrier (11) et l'autre est mobile pour permettre la mesure de la distance entre ces deux touches. Il comprend au moins une touche interchangeable (24,50) et des moyens (20,21,22) pour fixer la touche interchangeable (24) sur l'une des touches standard. De cette manière on permet une mesure au moyen d'une touche ayant une forme différente de celle des touches standard.

## Description

La présente invention concerne un système de touches interchangeables pour un dispositif de mesure, tel qu'un comparateur ou un micromètre, comportant un étrier et deux touches standard, dont l'une est fixe par rapport à l'étrier, et l'autre est mobile pour permettre la mesure de la distance entre lesdites deux touches selon un axe de mesure. L'invention concerne également un dispositif de mesure combiné à des touches interchangeables selon l'invention.

De tels dispositifs sont connus dans l'état de la technique, notamment dans les catalogues de constructeurs de tels dispositifs de mesure. Par exemple, la société MITUTOYO montre, dans un catalogue, un micromètre d'extérieur dit "UNIVERSEL" qui permet une interchangeabilité des touches de mesure.

La société MAHR commercialise quant à elle un autre système de calibre à touches interchangeables, ce système utilisant le principe d'un alésage conique sur l'étrier pour permettre l'interchangeabilité des touches qui comportent une partie conique correspondante. Un autre système de la société MAHR utilise un système de vissage, avec une contre-touche taraudée qui est fixée à l'étrier et un filetage correspondant sur les touches interchangeables.

Les désavantages de ces systèmes connus sont nombreux. Pour le système MITUTOYO, l'on peut mentionner le fait que le système permettant l'interchangeabilité des touches est assez encombrant et nécessite l'emploi d'un étrier spécifiquement adapté. Il est donc nécessaire d'acheter toute une gamme de nouveaux appareils de mesure pour bénéficier de ce système interchangeable.

En ce qui concerne le système MAHR, le principal désavantage réside dans le fait qu'il utilise notamment le principe d'un alésage conique dans lequel les touches interchangeables viennent s'emboîter par un cône morse. D'une part, compte tenu de la taille de pièces en jeu, de tels alésages coniques sont très difficile à réaliser avec des tolérances acceptables et, d'autre part, la moindre saleté ou poussière dans l'alésage conique peut fausser la mesure, qui est de l'ordre du micromètre.

La but de l'invention est d'améliorer les systèmes connus dans l'état de la technique.

Plus particulièrement, l'invention a pour but de proposer un système de touches interchangeables qui soit simple à réaliser, facile à utiliser, précis et qui puisse s'employer également sur des dispositifs de mesure standards du commerce.

Ces buts sont atteints par un système de touches interchangeables caractérisé en ce qu'il comprend au moins une touche interchangeable et des moyens pour fixer ladite touche interchangeable sur l'une desdites touches standard, la surface de référence de la touche interchangeable étant directement en contact avec la surface de référence de la touche standard, de manière à permettre une mesure au moyen d'une touche ayant une forme différente de celle des touches standard selon l'axe de mesure desdites touches standard.

Selon un premier mode d'exécution la touche interchangeable se monte sur la touche standard fixe du dispositif de mesure.

Selon une variante les moyens de fixation comprennent une douille se fixant par dessus l'extrémité de l'étrier portant la touche standard fixe, un support fixé à ladite douille, ledit support maintenant la touche interchangeable contre la touche standard.

Selon une autre variante particulière, un adaptateur comportant un taraudage est monté contre la touche standard, ladite touche interchangeable se vissant par l'intermédiaire d'un filetage dans le taraudage de l'adaptateur.

Selon une variante du premier mode d'exécution, le support est fixé à la douille par l'intermédiaire d'axes permettant une rotation du support par rapport à la douille.

Selon une autre variante du premier mode d'exécution, la douille est bloquée sur l'étrier par des moyens d'encliquetage.

Selon un deuxième mode d'exécution de l'invention, le système de touches est caractérisé en ce qu'il comprend une deuxième touche interchangeable se montant sur la touche standard mobile du dispositif de mesure.

Selon une variante les moyens de fixation comprennent au moins un chapeau coopérant avec le support de la touche standard et se plaçant par dessus la touche interchangeable pour bloquer celle-ci en position sur la touche standard.

Selon une autre variante du deuxième mode d'exécution, le chapeau se fixe par vissage sur le support de la touche standard.

Selon une autre variante du deuxième mode d'exécution, le système comprend au moins un adaptateur de touche ayant un taraudage, le chapeau bloquant l'adaptateur sur la touche standard, le taraudage de l'adaptateur fileté permettant le montage d'une touche ou d'un palpeur standard par l'intermédiaire d'un filetage correspondant audit taraudage.

Parmi les avantages de l'invention, l'on peut notamment citer le fait qu'elle peut s'utiliser avec des dispositifs de mesure standard. Un autre avantage réside dans le fait que l'on utilise les faces de référence des touches standard et qu'il est plus facile d'usiner des surfaces planes plutôt que des alésages coniques, en particulier quand on considère la taille des touches interchangeables.

L'invention sera mieux comprise grâce à la description de deux modes d'exécution de celle-ci et des figures qui s'y rapportent.
La figure 1 est une vue de côté d'un comparateur sur lequel le premier mode d'exécution du système selon l'invention est monté;
La figure 2 est une vue latérale en coupe axiale partielle du premier mode d'exécution;
La figure 3 est une vue de dessus en coupe partielle du premier mode d'exécution;
La figure 4 est une vue de côté d'un comparateur sur lequel le deuxième mode d'exécution du système selon l'invention est monté;
Les figures 5 et 6 sont des vues de détail de deux variantes du deuxième mode d'exécution.

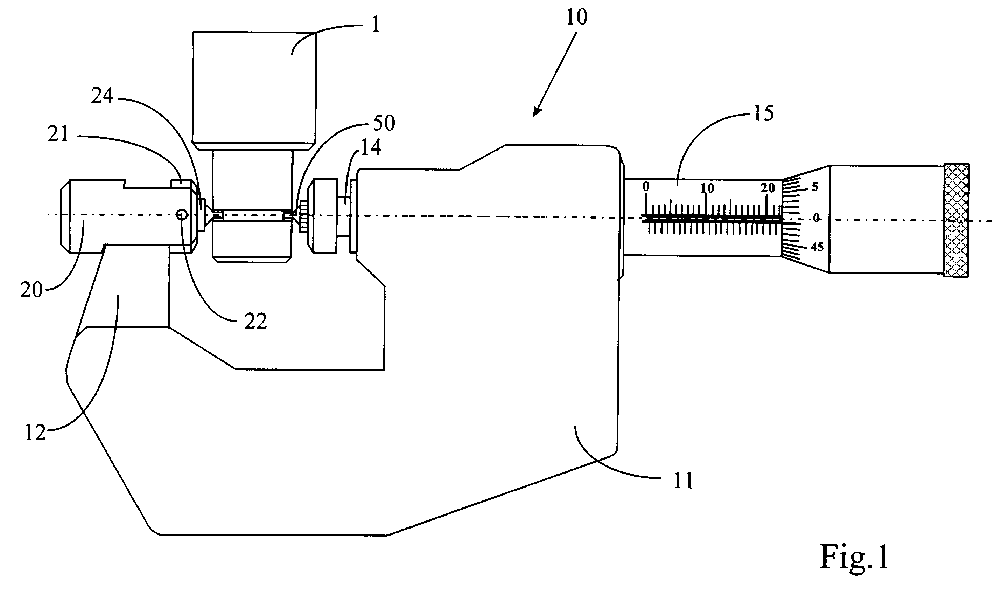

Le premier mode d'exécution est décrit en référence aux figures 1 à 3.

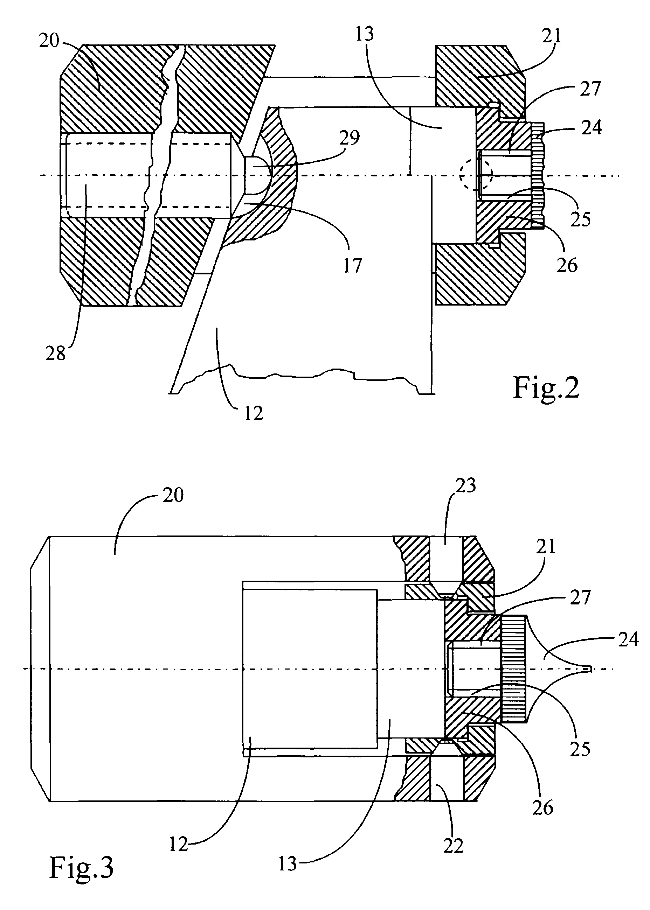

Dans la figure 1, un dispositif de mesure 10 classique, comme micromètre, est représenté de manière schématique. Ce micromètre comprend un étrier 11, dont l'une des extrémités 12 comporte une touche fixe 13 (voir figures 2 et 3) et une touche montée sur un axe 14 mobile par rapport à l'étrier et fixé à une butée micrométrique 15 permettant de mesurer de manière précise la distance entre les deux touches lorsque celles-ci sont amenées contre une pièce 1 introduite dans l'étrier 11.

Le dispositif de la figure 1 comporte deux touches interchangeables 24, 50 particulières et des moyens de fixation 20, 21, 22, 31 pour maintenir lesdites touches en position. La pièce 1 est une pièce qui est en train d'être mesurée au moyen des touches interchangeables 24, 50.

Le dispositif selon ce premier mode d'exécution est décrit plus en détail à l'aide des figures 2 et 3 qui montrent de manière détaillée les moyens de fixation de la touche interchangeable 24 sur la touche standard fixe 13 de l'extrémité 12 de l'étrier 11.

Ces moyens comprennent une douille 20 en forme de U, dont les branches sont fermées par un support cylindrique 21, qui est lui-même fixé auxdites branches par l'intermédiaire de deux axes 22, 23, ce qui permet sa rotation par rapport à la douille 20. Le support 21 est percé en son centre de manière à laisser passer la partie avant d'un adaptateur 26. La face arrière de l'adaptateur 26 est sa face de référence et elle vient se plaquer directement contre la face de mesure de la touche fixe 13. L'adaptateur 26 comporte un taraudage 27 dans lequel un filetage correspondant 25 de la touche amovible 24 se visse. Il est ainsi possible d'utiliser la touche fixe 13 d'origine comme référence pour la touche interchangeable 24.

Le montage du système est très simple. L'adaptateur 26 est introduit dans le support cylindrique 21, puis ce dernier est emboîté sur la touche fixe 13. Grâce aux axes 22, 23, la douille 20 est alors basculée par dessus l'extrémité 12 de l'étrier 11 et vient s'appuyer sur la surface externe de ladite extrémité.

Des moyens de blocage par encliquetage sont en outre prévus. Ces moyens comprennent une douille 28 cylindrique, qui est chassée à l'intérieur de la douille en U 20, à une extrémité de laquelle dépasse une bille 29, elle-même maintenue en position au moyen d'un ressort (non-représenté). Ladite bille 29 en coopérant avec une partie creuse 17 de l'étrier forme ce moyen d'encliquetage.

De par sa construction, le système plaque la face de référence de l'adaptateur 26 contre la touche fixe 13 ce qui permet de diminuer fortement les erreurs d'ajustement. La touche amovible 24 peut être alors vissée par l'intermédiaire de son filetage 25 dans le taraudage 27 correspondant de l'adaptateur 26.

Il est bien entendu possible de renoncer à l'utilisation d'un adaptateur 26 indépendant et de former une touche intégrant la forme et la fonction de celui-ci.

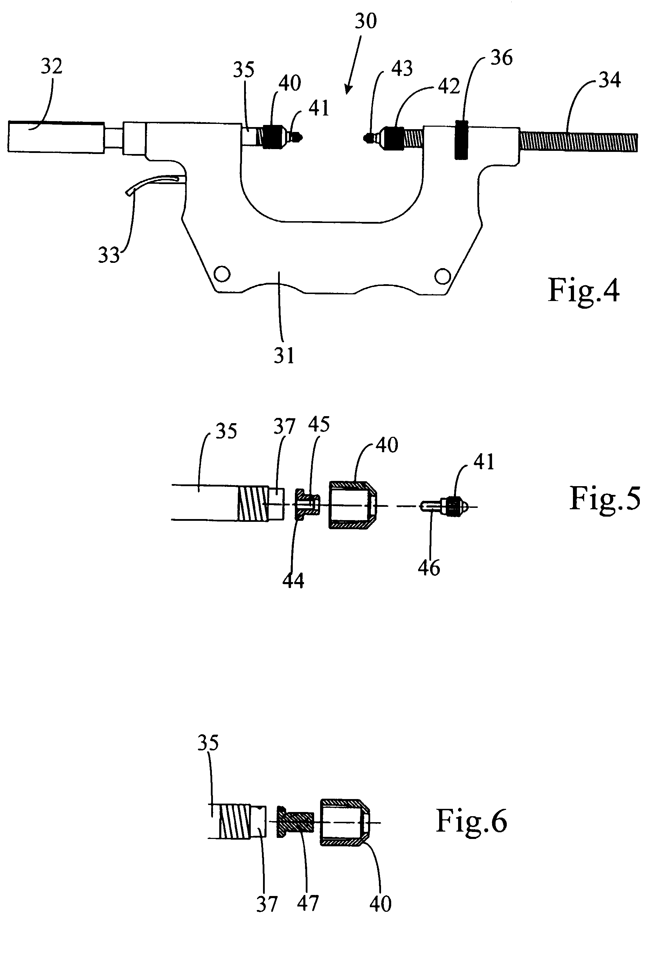

Le deuxième mode d'exécution de l'invention est décrit en référence aux figures 4 à 6.

Le dispositif de mesure, comme par exemple un micromètre 30, comprend un étrier 31, un comparateur 32, un levier 33 actionnant le comparateur 32 et son doigt de mesure 41, à l'extrémité duquel se trouve une touche de mesure 36. Un axe fileté 34 est monté à l'autre extrémité de l'étrier 31 et il porte la deuxième touche de mesure 43 qui est fixe par rapport à l'étrier 31 lors de la mesure. Une molette 36 permet d'ajuster la position de la tige filetée 34, donc de la touche de mesure fixe 43 par rapport à l'étrier 31 de manière à adapter la configuration du dispositif 30 à la taille des objets à mesurer.

Le système de touches interchangeables est décrit plus en détail à l'aide des figures 5 et 6. Ce système comprend un chapeau fileté 40, un adaptateur 44 et un palpeur 41. Selon la variante de la figure 6, l'adaptateur 44 et le palpeur 41 sont remplacés par une touche 47.

L'adaptateur 44 ou la touche interchangeable 47 comportent chacun une face de référence qui vient en contact avec la touche standard du dispositif de mesure et le chapeau 40 se visse ensuite par dessus la touche interchangeable sur un filetage de la tige 35 du comparateur 32 Dans le cas de la touche 43 qui est fixée à la tige filetée 34 un chapeau 42 est vissé directement sur le filetage de cette tige. Le palpeur 41, ou une touche similaire, est finalement vissé par le filetage 46 dans le taraudage 45 de l'adaptateur 44.

Dans la variante représentée à la figure 6, on a renoncé à l'emploi d'un adaptateur comportant un taraudage fileté, comme représenté à la figure 5. Une touche interchangeable 47 est par conséquent montée directement contre la touche standard 37 du comparateur et maintenue par le chapeau fileté 40.

Différents systèmes de mesure peuvent être utilisés en combinaison avec les touches interchangeables de l'invention. On peut par exemple utiliser un comparateur ou un micromètre, comme représenté dans les figures 1 et 4. Néanmoins, les touches interchangeables de l'invention peuvent être utilisées sur d'autres systèmes de mesure.

## Revendications

1. Système de touches interchangeable pour un dispositif de mesure, tel qu'un comparateur ou un micromètre, comportant un étrier (11,31) et deux touches standard (13,37), dont l'une est fixe par rapport à l'étrier (11,31) et l'autre est mobile pour permettre la mesure de la distance entre lesdites deux touches standard selon un axe de mesure, caractérisé en ce qu'il comprend en outre au moins une touche interchangeable (24,30;41,43,47) et des moyens (20,21,22,23;40,42) pour fixer ladite touche interchangeable sur l'une desdites touches standard (13,37), la surface de référence de la touche interchangeable étant directement en contact avec la surface de référence de la touche standard, de manière à permettre une mesure au moyen d'une touche ayant une forme différente de celle des touches standard selon l'axe de mesure desdites touches standard.

2. Système de touches selon la revendication 1, caractérisé en ce que la touche interchangeable (24;43) se monte sur la touche standard fixe (13) du dispositif de mesure.

3. Système de touches selon la revendication 2, caractérisé en ce que les moyens de fixation comprennent une douille (20) se fixant par dessus l'extrémité (12) de l'étrier (10) portant la touche standard fixe (13), un support (21) fixé à ladite douille (20), ledit support (21) maintenant la touche interchangeable (24;41,43,47) sur la touche standard (13).

4. Système de touches selon la revendication 3, caractérisé en ce que la touche interchangeable comprend un adaptateur (26) comportant un taraudage (27) et se plaçant contre la touche standard (13), ladite touche interchangeable (24) se vissant par l'intermédiaire d'un filetage (25) dans le taraudage (27) de l'adaptateur (26).

5. Système de touches selon l'une des revendications 3 ou 4, caractérisé en ce que le support (21) est fixé à la douille (20) par l'intermédiaire d'axes (22,23) permettant une rotation du support (21) par rapport à la douille (20).

6. Système de touches selon la revendication 4 ou 5, caractérisé en ce que la douille (20) est bloquée sur l'étrier (10) par des moyens d'encliquetage (17,28,29).

7. Système de touches selon la revendication 2, caractérisé en ce qu'il comprend une deuxième touche interchangeable (41,47) se montant sur la touche standard mobile (37) du dispositif de mesure.

8. Système de touches selon la revendication 7, caractérisé en ce que les moyens de fixation comprennent au moins un chapeau (40) coopérant avec le support (34,35) de la touche standard mobile (37) et se plaçant par dessus la touche interchangeable (41,43,47) pour bloquer celle-ci en position sur la touche standard (37).

9. Système de touches selon la revendication 8, caractérisé en ce que le chapeau (40) se fixe par vissage sur le support (34,35) de la touche standard mobile (37).

10. Système de touches selon la revendication 9 caractérisé en ce qu'il comprend au moins un adaptateur de touche (44) ayant un taraudage (45), le chapeau (40) bloquant l'adaptateur sur la touche standard mobile (37), le taraudage (45) de l'adaptateur fileté (44) permettant le montage d'une touche ou d'un palpeur standard (41,43) par l'intermédiaire d'un filetage (46) correspondant audit taraudage (45).

11. Dispositif de mesure caractérisé en ce qu'il est combiné à un système de touches interchangeables tel que défini selon l'un des revendications 1 à 10.
